(19) Europäisches Patentamt
European Patent Office
Office européen des brevets

(11) EP 1 165 571 B1

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(21) Anmeldenummer: **00907488.1**

(22) Anmeldetag: **29.01.2000**

(51) Int Cl.[7]: **C07F 9/30**, C08G 79/04

(86) Internationale Anmeldenummer:
**PCT/EP00/00712**

(87) Internationale Veröffentlichungsnummer:
**WO 00/056741 (28.09.2000 Gazette 2000/39)**

(54) **POLYMERE PHOSPHINSÄUREN UND DEREN SALZE**

POLYMERIC PHOSPHINIC ACIDS AND THE SALTS THEREOF

ACIDES PHOSPHINIQUES POLYMERIQUES ET LEURS SELS

(84) Benannte Vertragsstaaten:
**AT BE CH DE ES FR GB IT LI NL**

(30) Priorität: **22.03.1999 DE 19912920**

(43) Veröffentlichungstag der Anmeldung:
**02.01.2002 Patentblatt 2002/01**

(73) Patentinhaber: **Clariant GmbH
65929 Frankfurt am Main (DE)**

(72) Erfinder:
- **SICKEN, Martin
D-51149 Köln (DE)**
- **WEFERLING, Norbert
D-50354 Hürth (DE)**
- **SCHMITZ, Hans-Peter
D-50321 Brühl (DE)**

(56) Entgegenhaltungen:
**DE-A- 1 943 577** **US-A- 3 734 954**

- **CHEMICAL ABSTRACTS, vol. 101, no. 11, 10. September 1984 (1984-09-10) Columbus, Ohio, US; abstract no. 91059, E. NIFANT'EV ET AL.: "Reaction of acetylenes with acid hydrophosphoryl compounds" XP002138314 & ZH. OBSHCH. KHIM., Bd. 54, Nr. 3, 1984, Seiten 711-712, Moskau**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neuartige polymere Phosphinsäuren und deren Salze, ein Verfahren zu ihrer Herstellung und ihre Verwendung

Phosphinsäuren und deren Salze sind nach verschiedenen Methoden herstellbar und in großem Umfang beschrieben. So findet sich eine umfassende Übersicht in: *Kosolapoff, Maier:* "*Organic Phosphorus Compounds ", Volume 6. Wiley-Interscience, 1973*. Bei den bislang bekannten Verbindungen handelt es sich größtenteils um monomere Phosphinsäuren, d.h. um solche Phosphinsäuren die nur eine Phosphinsäuregruppe enthalten. Auch einige Diphosphinsäuren und deren Salze sind bekannt, wie Ethan-1,2-diethylphosphinsäure (*P. Mastalerz, Roczniki Chem. 38, 61 (1964)*).

Hinweise auf polymere Phosphinsäuren beschränken sich bis heute auf Koordinationspolymere, in denen monomere Phosphinsäuren als Brücken-Liganden für Metall-Ionen fungieren. Einen Überblick über diese, als Poly-Metallphosphinate bezeichnete Produktgruppe, findet man in:
*B. P. Block, Inorg. Macromol. Rev., 1 (1970) 115-125.*

Die radikalinitierte Umsetzung von Olefinen mit Hypophosphoriger Säure ist bekannt und führt, wie in der noch nicht veröffentlichten Deutschen Patentanmeldung DE-A-19851618 beschrieben, zu den entsprechenden monomeren Phosphinsäuren.

Die radikalinitierte Umsetzung von Acetylenen mit Hypophosphoriger Säure wurde ebenfalls untersucht [*Nifant'ev et al., Zh. Obshch. Khim. (1986), 56(4) S. 773-781*]; als Reaktionsprodukte wurden lediglich Gemische von Vinylphosphonigen Säuren, Divinylphosphinsäuren und Diphosphonigen Säuren erhalten.

In *Zh. Obshch. Khim. (1984), 54(3), S. 711-712 (Nifant'ev et al.)* wurde auch ein Verfahren zur Herstellung von Vinylphosphonigen Säuren durch Umsetzung von Hypophosphoriger Säure mit langkettigen Acetylenen beschrieben, wobei nur schlechte Ausbeuten erhalten worden sind.

US-A-3 734 954 und DE-A-1 943 577 von der Monsanto Co. beschreiben chlorhaltige Polyphosphinsäuren der allgemeinen Formel $Cl-[CH_2-P(=O)(OZ)]_n-OZ$, wobei Z für H, Metallatom, Ammonium oder einen Kohlenwasserstoffrest steht und $n \geq 2$ ist, sowie ein Verfahren zu deren Herstellung.

"Echte" polymere Phosphinsäuren, d.h. solche, die auf Basis kovalenter Bindungen aufgebaut sind und in den Wiederholungseinheiten Phosphinsäuregruppierungen enthalten, waren bislang unbekannt.

Die Erfindung betrifft daher polymere Phosphinsäuren und ihre Salze der allgemeinen Formel (I),

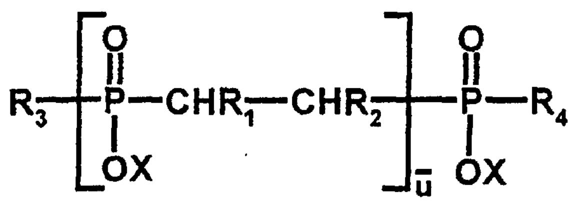

(I)

in der

X Wasserstoff oder ein 1/m Metall der Wertigkeit m bedeutet,

$R_1$ , $R_2$ gleich oder verschieden sind und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen,

$R_3$ , $R_4$ gleich oder verschieden sind und für Wasserstoff oder für eine Vinylgruppe der allgemeinen Formel (VI)

$$-CR_1=CHR_2$$

(VI)

steht, in der $R_1$ , $R_2$ die oben angegebenen Bedeutung haben, und
ü die mittlere Zahl von Monomereinheiten bedeutet.

Bevorzugt handelt es sich bei X um ein Metall der Gruppen IA, IIA, IIIA, IVA, VA, IIB, IVB, VIIB, VIIIB des Periodensystems oder um Cer.

Bevorzugt handelt es sich bei dem Metall um Li, Na, K, Mg, Ca, Sr, Ba, Al, Ge, Sn, Sb, Bi, Zn, Ti, Zr, Mn, Fe und/oder Ce.

Besonders bevorzugt handelt es sich bei dem Metall um Na, Ca, Al und/oder Zn.

Bevorzugt handelt es sich bei X um H.

Bevorzugt sind $R_1$ , $R_2$ gleich oder verschieden und stehen für Wasserstoff oder für eine - ggf. substituierte - Alkylgruppe mit 1 bis 10 C-Atomen.

Bevorzugt sind $R_1$ , $R_2$ gleich oder verschieden und stehen für Wasserstoff oder für eine - ggf. substituierte - Alkylgruppe mit 1 bis 10 C-Atomen, wobei es sich bei den Substituenten um einen oder mehreren aus den Gruppen OH, CN, $NH_2$ handelt.

Bevorzugt sind $R_1$ , $R_2$ gleich oder verschieden und stehen für Wasserstoff oder für eine Alkylgruppe mit 1 bis 4 C-Atomen, die mit ein oder zwei OH-Gruppen substituiert ist.

Bevorzugt sind $R_1$ , $R_2$ gleich oder verschieden und stehen für Wasserstoff oder für ein Carbonsäurederivat.

Bevorzugt sind $R_1$ , $R_2$ gleich oder verschieden und stehen für Wasserstoff oder für ein Carbonsäurederivat der Formel COOR und worin R eine Alkylgruppe mit 1 bis 4 C-Atomen bedeutet.

Bevorzugt stehen $R_3$ , $R_4$ für Wasserstoff.

Bevorzugt stehen $R_3$ , $R_4$ jeweils für eine Vinylgruppe der allgemeinen Formel $-CR_1=CHR_2$ (VI), in der $R_1$ , $R_2$ die oben angegebenen Bedeutung haben.

Bevorzugt steht $R_3$ für H und $R_4$ für eine Vinylgruppe der allgemeinen Formel $-CR_1=CHR_2$ (VI), in der $R_1$ , $R_2$ die oben angegebenen Bedeutung haben.

Bevorzugt steht $R_3$ für eine Vinylgruppe der allgemeinen Formel $-CR_1=CHR_2$ (VI), in der $R_1$, $R_2$ die oben angegebenen Bedeutung haben und $R_4$ für H steht.

Bevorzugt bedeuten $R_1$ und $R_2$ jeweils eine gleiche oder verschieden Alkylgruppe mit 1 bis 10 C-Atomen oder Wasserstoff, wenn mindestens eine der Gruppen $R_3$ oder $R_4$ für eine Vinylgruppe der allgemeinen Formel $-CR_1=CHR_2$ steht.

Gegenstand der vorliegenden Erfindung sind insbesondere polymere Phosphinsäuren und ihre Salze der Formeln

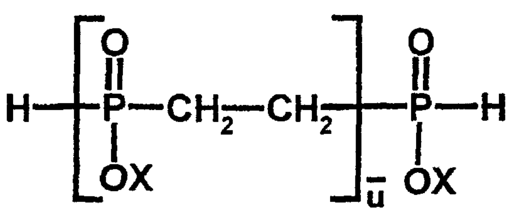

mit X = H, l/m Metall

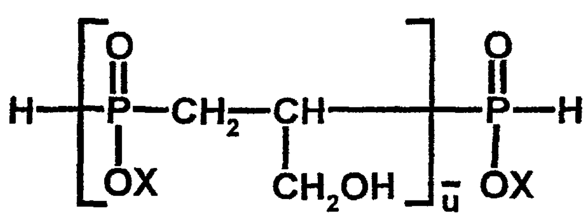

mit X = H, 1/m Metall

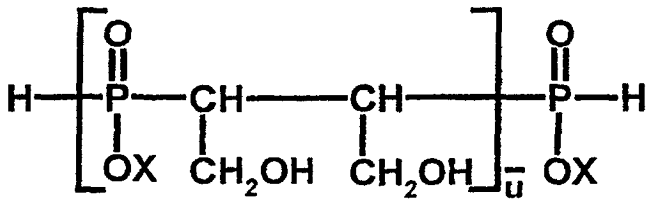

mit X = H, 1/m Metall

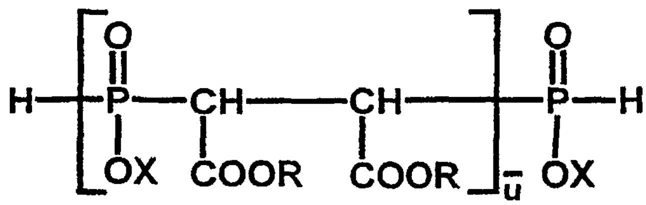

mit X = H, 1/m Metall

Die Erfindung betrifft auch ein Verfahren zur Herstellung von polymeren Phosphinäuren und ihren Salzen der Formel (I), dadurch gekennzeichnet, daß man Hypophosphorige Säure und/oder ihre Alkalimetallsalze mit Acetylenen der Formel (II),

$$R_1—C\equiv C—R_2$$

**(II)**

in der $R_1$ , $R_2$ gleich oder verschieden sind und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen, umsetzt

Bevorzugt setzt man Alkalimetallsalze der Hypophosphorigen Säure mit Acetylenen der Formel (II) um und dann die so erhaltenen Alkalimetallsalze der polymeren Phosphinsäure mit mindestens einer Metallverbindung der Gruppen IA, IIA, IIIA, IVA, VA, IIB, IVB, VIIB, VIIIB des Periodensystems oder mit einer Cerverbindung. Dieses Verfahren schließt also die Umwandlung eines ersten Alkalimetallsalzes der polymeren Phosphinsäure in ein anderes Alkalimetallsalz der polymeren Phosphinsäure mit ein.

Bevorzugt setzt man die Hypophosphorige Säure mit Acetylenen der Formel (II) um und dann die so erhaltenen polymeren Phosphinsäuren mit mindestens einer Metallverbindung der Gruppen IA, IIA, IIIA, IVA, VA, IIB, IVB, VIIB, VIIIB des Periodensystems oder mit einer Cerverbindung.

Bevorzugt handelt es sich bei der Metallverbindung um eine solche von Li, K, Na, Mg, Ca, Sr, Ba, Al, Ge, Sn, Sb, Bi, Zn, Ti, Zr, Mn, Fe und/oder Ce.

Bevorzugt setzt man Alkalimetallsalze der Hypophosphorigen Säure mit Acetylenen der Formel (II) um und die so erhaltenen Alkalimetallsalze der polymeren Phosphinsäure mit einer Säure zur polymeren Phosphinsäure. Die so erhaltene polymere Phosphinsäure kann dann einem oder mehreren der vorgenannten Verfahrensschritten unterworfen werden.

Die Variation der Variable X in Formel (I) kann daher, wie oben formuliert, auf verschiedene Weise erfolgen. Setzt man beispielsweise als Edukt der oben beschriebenen Umsetzung mit Acetylenen die leicht erhältlichen Alkalimetallsalze der Hypophosphorigen Säure ein, gelangt man zu den entsprechenden Poly-Alkaliphosphinaten, beispielsweise mit X = Li, Na, K in Formel (I). Setzt man als Edukt Hypophosphorige Säure ein, gelangt man zu den freien Polyphosphinsäuren mit X = H in Formel (I). Letztere kann man ebenso durch Ansäuern der Alkalimetallphosphinate erhalten.

Durch gängige Fällungs- und Umsalzungsverfahren können aus den Alkalisalzen der Polyphosphinsäuren oder aus den freien Polyphosphinsäuren Polyphosphinsäure-Salze zahlreicher Metalle, wie beispielsweise der Erdalkalimetalle, der Metalle der II. - V. Hauptgruppe sowie der Nebengruppenmetalle gewonnen werden.

Bevorzugt setzt man pro Mol Hypophosphorige Säure oder ihrem Alkalimetallsalz 0,6 bis 1,5 Mol Acetylen der Formel (II) ein.

Bevorzugt erfolgt die Umsetzung in Gegenwart eines Radikalstarters.

Eine Übersicht über solche Verbindungen und ihre Wirkungsweise findet sich beispielsweise in: *Houben-Weyl, Ergänzungsband 20, Kapitel "Polymerisation durch radikalische Initiierung", s. 15 - 74.*

Bevorzugt werden als Radikalstarter Azo-Verbindungen eingesetzt.

Bevorzugt handelt es sich bei den Azo-Verbindungen um kationische und/oder nicht-kationische Azo-Verbindungen.

Bevorzugt werden als kationische Azo-Verbindungen 2,2'-Azobis(2-amidinopropan)-dihydrochlorid oder 2,2'-Azobis(N,N'-dimethylenisobutyramidin)-dihydrochlorid eingesetzt.

Bevorzugt werden als nicht-kationische Azo-Verbindungen Azobis(isobutyronitril), 4,4'-Azobis(4-cyano-pentansäure) oder 2,2'-Azobis(2-methylbutyronitril) eingesetzt.

Bevorzugt werden als Radikalstarter peroxidische anorganische und/oder peroxidische organische Radikalstarter eingesetzt.

Bevorzugt werden als peroxidische anorganische Radikalstarter Wasserstoffperoxid, Ammoniumperoxodisulfat und/oder Kaliumperoxodisulfat eingesetzt.

Bevorzugt werden als peroxidische organische Radikalstarter Dibenzoylperoxid, Di-tert.butylperoxid und/oder Peressigsäure eingesetzt.

Bevorzugt erfolgt die Umsetzung in einem polaren Lösungsmittel.

Bevorzugt handelt es sich bei dem polaren Lösungsmittel um Essigsäure.

Bevorzugt erfolgt die Umsetzung bei einer Temperatur von 20 bis 180 °C.

Besonders bevorzugt erfolgt die Umsetzung bei einer Temperatur von 80 bis 120 °C.

Bevorzugt erfolgt die Umsetzung in einem Druckreaktor. Dies gilt insbesondere wenn der Siedepunkt der Acetylene unterhalb der Reaktionstemperatur liegt.

In einer anderen bevorzugten Ausführungsform der Erfindung wird das Verfahren drucklos ausgeführt.

Bevorzugt werden als Edukt Hypophosphorige Säure und/oder Alkalisalze der Hypophosphorigen Säure eingesetzt.

Besonders bevorzugt wird Natriumhypophosphit eingesetzt.

Als Acetylene können sowohl das unsubstituierte Acetylen selbst mit $R_1$, $R_2$ = H in Formel (II), einfach substituierte Derivate mit $R_1$ = H; $R_2 \neq$ H in Formel (II) oder aber auch zweifach substituierte Acetylene mit $R_1$, $R_2 \neq$ H in Formel (II) eingesetzt werden.

Beispiele für geeignete Acetylene sind die Alkine Ethin, Phenylacetylen, Diphenylacetylen, Propin, 1-Butin, 2-Butin, 1-Phenylbutin, 1-Pentin, 2-Pentin, 1-Phenyl-1-pentin, 1-Hexin, 2-Hexin, 3-Hexin, 1-Phenyl-1-hexin, 1-Heptin, 1-Octin, 4-Octin, 1-Nonin, 1-Decin und 1-Dodecin, die Alkinole Propargylalkohol, 1-Butin-3-ol, 2-Butin-1-ol, 2-Butin-1,4-diol, 1-Pentin-3-ol, 2-Pentin-1-ol, 4-Pentin-1-ol, 4-Pentin-2-ol, 3-Hexin-1-ol, 5-Hexin-1-ol, 3-Hexin-2,5-diol, 2-Octin-1-ol, 1-Octin-3-ol, 3-Nonin-1-ol, 3-Decin-1-ol sowie Propargylchlorid, Propargylbromid, Propargylamin, Propiolsäure, Propiolsäuremethylester, Propiolsäureethyl-ester, 2-Butinsäure, 2-Butinsäureethylester, 4-Pentinsäure, 5-Hexinsäurenitril, 2-Octinsäure, 2-Octinsäuremethylester, 2-Nonylsäuremethylester, Acetylendicarbonsäure, Acetylendicarbonsäurediethylester und Acetylendicarbonsäuredimethylester.

Bevorzugt werden als Acetylene die 1-Alkine, Propargylalkohol, Butindiol, Propiolsäure und Acetylendicarbonsäure-Derivate eingesetzt.

Besonders bevorzugt wird Ethin (Acetylen) selbst eingesetzt.

Schließlich betrifft die Erfindung auch die Verwendung der erfindungsgemäßen polymeren Phosphinsäuren und ihren Salzen als Flammschutzmittel.

Bevorzugt werden die polymeren Phosphinsäuren und ihren Salzen als Flammschutzmittel in thermoplastischen Polymeren eingesetzt.

Sie können auch zur Herstellung von Synthesebausteinen für die phosphororganische Synthese verwendet werden.

Die erfindungsgemäßen neuen polymeren Phosphinsäuren und deren Salze lassen sich durch die allgemeine Formel (I) beschreiben,

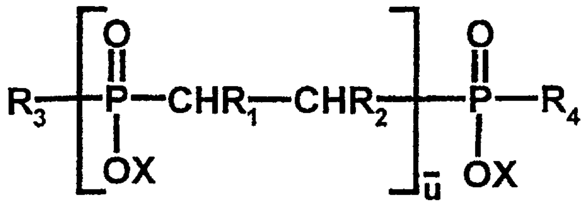

(I)

in der X ein Wasserstoffatom oder ein 1/m Metall der Wertigkeit m bedeutet, $R_1$ und $R_2$ gleich oder verschieden sein können und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen; $R_3$ und $R_4$ gleich oder verschieden sein können und für Wasserstoff oder eine Vinylgruppe der allg. Formel (VI)

$$—CR_1{=}CHR_2$$

(VI)

mit den für $R_1$ und $R_2$ oben angegebenen Bedeutungen steht und ū die mittlere Zahl von Monomereinheiten bedeutet. Bevorzugte Werte für ū liegen zwischen 2 und 1.000, ū kann aber gegebenenfalls auch größere Werte annehmen.

Wie bei der Bezeichnung von Polymeren üblich, bedeutet ü die mittlere Zahl der Monomereinheiten, wobei sich ū aus der Gesamtzahl der Monomereinheiten pro Polymermolekül und der Verteilung (Häufigkeit) der verschiedenen Polymermoleküle ergibt.

Gemäß nachfolgender Definition anhand des weiter unten näher beschriebenen Reaktionsschemas A kann u, welches analog zu ū die relative Zahl der Monomereinheiten angibt, in der (vereinfachten) Formel (Ia) eine beliebige Zahl zwischen 0 und 10.000, gegebenenfalls auch oberhalb 10.000, sein.

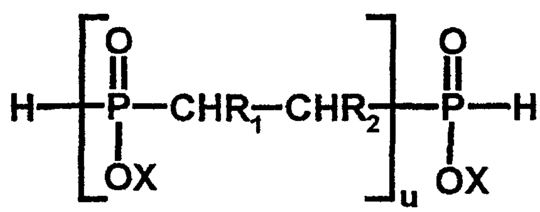

(Ia)

Ist in der vorgenannten (vereinfachten) Formel (Ia) der Wert für u = 1 (und X steht für Wasserstoff), erhält man die Ethylendiphosphonige Säure gemäß Formel (V). Entsprechend können auch Dimere, Trimere etc. erhalten werden.

Für polymere Phosphinsäuren und ihre Salze mit einem relativ kleinen Wert (z.B. ū = 3) gilt für die mittlere Kettenlänge ū, daß hier verstärkt Werte für u im Bereich von 0 bis ca. 6 auftreten, während mittlere und längere Polymerketten in ihrer Häufigkeit gegen Null gehen.

Umgekehrt ist bei einem recht großen Wert für ū (z.B. ū = 500) die Zahl von Monomeren, Dimeren, Trimeren etc. verschwindend gering oder mit Null gleichzusetzten, während u, also die relative Zahl von Monomereinheiten zu größeren Zahlenwerten, insbesondere hier im Bereich von 350 bis 700, tendiert.

Es wurde nun überraschenderweise gefunden, daß ein breites Spektrum der vorgenannten polymeren Phosphinsäuren und ihrer Salze auf einfache und besonders wirtschaftliche Art und Weise insbesondere durch radikalinitiierte Polyaddition von Acetylenen an Hypophosphorige Säure bzw. deren Salze hergestellt werden kann.

Die beanspruchten polymeren Phosphinsäuren und deren Salze werden hergestellt, indem Hypophosphorige Säure bzw. ihre (Alkali)Salze, bevorzugt in Gegenwart eines Radikalinitiators, mit Acetylenen der allgemeinen Formel (II) umgesetzt werden,

$$R—C\equiv C—R_2$$

(II)

wobei in der obigen Formel $R_1$ und $R_2$ gleich oder verschieden sein können und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen.

Je nach Reaktivität der eingesetzten Produkte erhält man Polyphosphinsäuren mit Phosphonigsäure-Endgruppen (Typ A, Reaktionsschema A) oder solche mit Vinyl-Endgruppen (Typ B im Reaktionsschema B auf Seite 12).

Das Grundprinzip der Polyaddition, die zum Typ A führt, kann beispielsweise nach dem folgendem vereinfachten Reaktionsschema A am Beispiel der Umsetzung der freien Hypophosphorigen Säure beschrieben werden:

Reaktionsschema A:

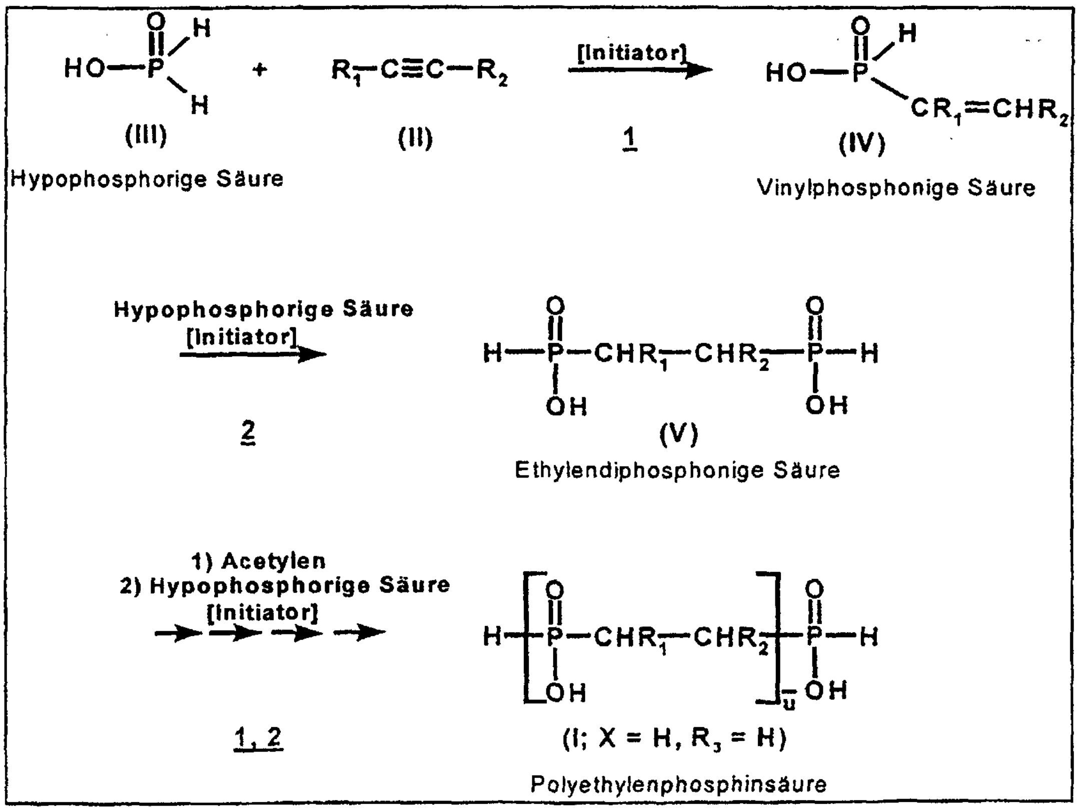


In einer ersten Reaktionsstufe (1) wird mit Hilfe eines Radikalinitiators eine P-H-Bindung der Hypophosphorigen Säure an die Dreifachbindung des Acetylens addiert. Es entsteht dabei eine Vinylphosphonige Säure (**IV**), an deren Doppelbindung in einer zweiten Reaktionsstufe (2) unter gleichen Reaktionsbedingungen ein weiteres Hypophosphit-Molekül addiert wird. Die so entstehende Diphosphonige Säure (**V**) wird in vorbeschriebener Weise an weitere Acetylen- und Hypophosphit-Einheiten zu Polyphosphinsäuren (**I**) addiert.

Der Verlauf des Kettenaufbaus kann während der Reaktion durch $^{31}P$-NMR-spektroskopische Untersuchungen verfolgt werden. Das Integral der Signalgruppe der Phosphonigen Säuren bei $\delta$ = ca. 30 ppm ($Int_{phosphonigs.}$) repräsentiert dabei die vorhandenen Endgruppen, während das Integral der Signalgruppe der Phosphinsäuren bei $\delta$ = ca. 55 ppm ($Int_{phosphins.}$) für die Zahl der mittelständigen Gruppen steht. Die Berechnung der Kettenlänge erfolgt nach folgender Formel:

$$\bar{u} = 1 + \frac{2 \cdot Int_{phosphins.}}{Int_{phosphonigs.}}$$

Auch die Bestimmung der Endkettenlänge der polymeren Phosphinsäuren und damit auch des mittlere Molkulargewichtes kann über diese Berechnung aus dem $^{31}$P-NMR-Spektrum erfolgen.

Die Kettenlänge der neuen Polyphosphinsäuren und ihrer Salze kann durch die Wahl der Reaktionsbedingungen in einfacher Weise gesteuert und in hohem Maße variiert werden. Wichtigstes Steuerungsglied ist dabei das Verhältnis der Ausgangsprodukte. Setzt man beispielsweise equimolare Mengen Hypophosphit und Acetylen ein und wendet hohe Reaktionszeiten und -Temperaturen an, entstehen besonders hochmolekulare Polyphosphinsäuren mit $\bar{u} > 100$. Setzt man die Edukte beispielsweise im molaren Verhältnis 1 (Hypophosphit) zu 0.75 (Acetylen) ein, so erhält man eine besonders niedermolekulare Polyphosphinsäure mit einer mittleren Kettenlänge von $\bar{u} = 3$.

Bei gasförmigen Acetylenen, wie dem Acetylen als Stammverbindung selbst, ist die Reaktion über die Dauer der Gaseinleitung zu steuern. Je länger die Acetylen-Einleitung erfolgt, desto längere Ketten werden aufgebaut.

Die vorgenannten Aussagen gelten insbesondere für Verbindungen, die nach dem Verfahren des vorstehend beschriebenen Reaktionsschemas A hergestellt werden

Polymere Phosphinsäuren und ihre Salze, die bevorzugt endständige Vinylgruppen aufweisen, werden insbesondere nach dem im Reaktionsschema B beschriebenen Verfahren erhalten. Hierfür gilt:
Wenn die Geschwindigkeit der Addition an die Vinylphosphonige Säure (Reaktion 2) deutlich langsamer verläuft als die Addition an das Acetylen (Reaktion 1), ist folgendes Reaktionsschema für die zum Polyphosphinsäure-Typ B führende Polyaddition wahrscheinlich:

Reaktionsschema B

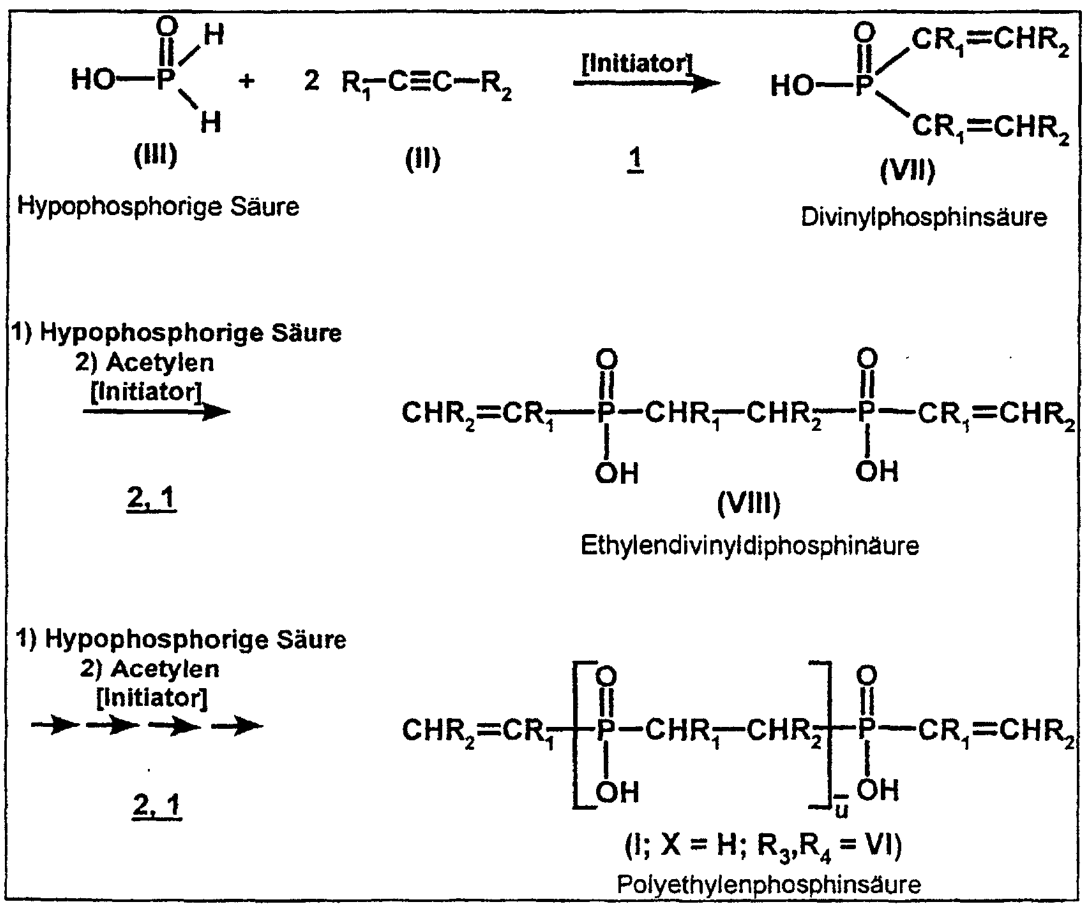


Diesen Reaktionsverlauf, der zu Polyphosphinsäuren mit Vinyl-Endgruppen (Typ B) führt, findet man vor allem, wenn Acetylene mit sperrigen Gruppen verwendet werden.

Der Reaktionsverlauf sowie die Bestimmung der Kettenlänge kann hier mit Hilfe kombinierter $^{31}P$- und $^{1}H$-NMR-Untersuchungen erfolgen. Das Verhältnis der Endgruppen zu den mittleren Kettengliedern, und damit die mittlere Kettenlänge in (**I**) ist hierbei über das Verhältnis der Absorptionen der endständigen Vinylprotonen zu den Absorptionen der Brücken-Ethylenprotonen zu bestimmen.

Auch bei der nach diesem Schema ablaufenden Polyaddition ist die Kettenlänge der neuen Polyphosphinsäuren durch die Wahl der Reaktionsbedingungen und vor allem durch das Verhältnis der Ausgangsprodukte in einfacher Weise steuerbar und in hohem Maße variierbar.

Setzt man beispielsweise equimolare Mengen Hypohosphit und Acetylen ein und wendet hohe Reaktionszeiten und -Temperaturen an, entstehen besonders hochmolekulare Polyphosphinsäuren mit $\bar{u} > 100$.

Setzt man die Edukte beispielsweise im molaren Verhältnis 1 (Hypophosphit) zu 1.25 (Acetylen) ein, so erhält man eine niedermolekulare Polyphosphinsäure mit $\bar{u} = 3$.

Entsprechend den vorangegangenen Ausführungen sind die vorstehend beschriebenen Verbindungen nach den Formeln (IV), (V), (VII) und (VIII) ebenfalls Gegenstand der vorliegenden Erfindung. Sie können bei entsprechenden Verfahrensoptimierung an geeigneter Stelle isoliert und nachgewiesen werden.

Beide hier aufgezeigten grundsätzlichen Reaktionverläufe A und B können auch parallel zueinander ablaufen und führen zu Polyphosphinsäuren mit gemischten Phosphonigsäure- und Vinyl-Endgruppen, wie sie auch beispielsweise in den Ansprüchen 13 und 14 näher definiert sind.

Gemäß der vorliegenden Erfindung erfolgt die stufenweise Addition von zwei Hypophosphit-Radikalen an die Dreifachbindung, wie in den beiden möglichen Reaktionsschemata (A und B) und in Formel (I) beschrieben, vorzugsweise in 1,2-Position.

Abhängig von den sterischen und elektronischen Einflüssen der Substituenten ($R_1$, $R_2$) im eingesetzten Acetylen kann auch eine 1,1-Addition erfolgen, d.h. es können in den polymeren Phosphinsäuren auch Struktureinheiten des folgenden Typs enthalten sein:

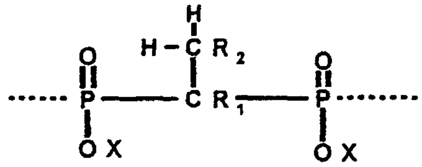

Polymere Phosphinsäuren und deren Salze, die diese Struktureinheiten enthalten, sind ebenfalls Gegenstand der vorliegenden Erfindung.

Daneben können durch Cyclopolyaddition, vor allem wenn die Umsetzung in verdünnter Lösung durchgeführt wird, als Nebenprodukte auch Cyclopolyphosphinsäuren bzw. deren Salze der allg. Formel (IX) entstehen,

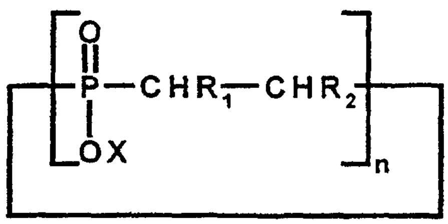

(IX)

in der X ein Wasserstoffatom oder ein 1/m Metall der Wertigkeit m bedeutet, $R_1$ und $R_2$ gleich oder verschieden sein können und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen und in der n für eine Zahl von 2 bis 100 steht.

Solche Cyclopolyphosphinsäuren bzw. deren Salze der allg. Formel (IX) sind ebenfalls Gegenstand der vorliegenden Erfindung.

Die erfindungsgemäßen polymeren Phosphinsäuren und deren Eigenschaften können nicht nur bezüglich ihrer vorherrschenden Endgruppe, sondern in vielfältiger Weise durch die Wahl der Reaktionsbedingungen und vor allem durch die Wahl der Reaktionspartner variiert werden.

Beispiel 1: Polyethylenphosphinsäure

In einem beheizbaren Glasrohrreaktor mit Begasungsfritte wurde über einen Zeitraum von 30 h bei einer Temperatur von ca. 100°C gasförmiges Acetylen in eine Lösung von 106 g Natriumhypophosphit (1 mol) in 250 ml Eisessig eingeleitet. Über den gesamten Zeitraum wurde dabei gleichmäßig eine Lösung von 27 g (10 Mol%) 2,2'-Azobis(2-amidinopropan)-dihydrochlorid in 500 g eines Wasser/Essigsäure-Gemisches (1:3) zudosiert. Nach einer Nachreaktionszeit von 0.5 h, Entfernung des Acetylens mittels Durchleiten von Stickstoff und Abkühlung auf Raumtemperatur wurde die Reaktionsmischung vom Lösungsmittel befreit, in 400 ml Wasser aufgenommen und mit 100 ml konzentrierter Salzsäure versetzt. Der entstandene Niederschlag wurde filtriert, zweimal mit je 200 ml Wasser gewaschen und im Wasserstrahlvakuum bei 130°C getrocknet. So erhielt man 82 g eines weißen Pulvers, entsprechend einer Ausbeute von 77.4 %, bezogen auf eingesetztes Hypophosphit. Die Elementaranalyse bestätigt die vorgeschlagene Polymerstruktur: P: ber. 33.7%/gef. 31.6%; C: ber. 26.1%/gef. 26.7%; H: ber. 5.4%/gef.5:7%. Im $^{31}P$-NMR-Spektrum (NaOD) wurden folgende Signale gefunden:

$\delta$ = 45 - 53 ppm: breite Multipletts (polymere Phosphinsäuregruppen): Integral: 95
$\delta$ = 30 - 35 ppm: breites Multiplett (Phosphonige Säure-Endgruppen): Integral: 1.3 berechnete mittlere Kettenlänge: $\bar{u}$ = 147

Beispiel 2: Polyethylenphosphinsäure

In einem beheizbaren Glasrohrreaktor mit Begasungsfritte wurde über einen Zeitraum von 9 h bei einer Temperatur von ca. 100°C gasförmiges Acetylen in eine Lösung von 106 g Natriumhypophosphit (1 mol) in 250 ml Eisessig eingeleitet. Über den gesamten Zeitraum wurde dabei gleichmäßig eine Lösung von 8.1 g (3 Mol%) 2,2'-Azobis(2-amidinopropan)-dihydrochlorid in 150 g eines Wasser/Essigsäure-Gemisches (1:3) zudosiert. Nach einer Nachreaktionszeit von 0.5 h, Entfernung des Acetylens mittels Durchleiten von Stickstoff und Abkühlung auf Raumtemperatur wurde die Reaktionsmischung vom Lösungsmittel befreit, in 400 ml Wasser aufgenommen und mit 100 ml konzentrierter Salzsäure versetzt. Der entstandene Niederschlag wurde filtriert, zweimal mit je 200 ml Wasser gewaschen und im Wasserstrahlvakuum bei 130°C getrocknet. So erhielt man 79 g eines weißen Pulvers, entsprechend einer Ausbeute von 74.5 %, bezogen auf eingesetztes Hypophosphit. Die Elementaranalyse bestätigt die vorgeschlagene Polymerstruktur: P: ber. 33.7%/gef. 31.6%; C: ber. 26.1%/gef. 25.0%; H: ber. 5.4%/gef.5.6%. Im $^{31}P$-NMR-Spektrum (NaOD) wurden folgende Signale gefunden:

$\delta$ = 45 - 53 ppm: breite Multipletts (polymere Phosphinsäuregruppen): Integral: 87
$\delta$ = 30 - 35 ppm: breites Multiplett (Phosphonige Säure-Endgruppen): Integral: 12.6 berechnete mittlere Kettenlänge: $\bar{u}$ = 15

Beispiel 3: Polyethylenphosphinsäure

In einem beheizbaren Glasrohrreaktor mit Begasungsfritte wurde über einen Zeitraum von 6 h bei einer Temperatur von ca. 100°C gasförmiges Acetylen in eine Lösung von 106 g Natriumhypophosphit (1 mol) in 250 ml Eisessig eingeleitet. Über den gesamten Zeitraum wurde dabei gleichmäßig eine Lösung von 5.4 g (2 Mol%) 2,2'-Azobis(2-amidinopropan)-dihydrochlorid in 100 g eines Wasser/Essigsäure-Gemisches (1:3) zudosiert. Nach einer Nachreaktionszeit von 0.5 h, Entfernung des Acetylens mittels Durchleiten von Stickstoff und Abkühlung auf Raumtemperatur wurde die Reaktionsmischung vom Lösungsmittel befreit, in 400 ml Wasser aufgenommen und mit 100 ml konzentrierter Salzsäure versetzt. Der entstandene Niederschlag wurde filtriert, zweimal mit je 200 ml Wasser gewaschen und im Wasserstrahlvakuum bei 130°C getrocknet. So erhielt man 70 g eines weißen Pulvers, entsprechend einer Ausbeute von 66.0 %, bezogen auf eingesetztes Hypophosphit. Die Elementaranalyse bestätigt die vorgeschlagene Polymerstruktur: P: ber. 33.7%/gef. 32.5%; C: ber. 26.1%/gef. 25.7%; H: ber. 5.4%/gef.5.5%. Im $^{31}P$-NMR-Spektrum (NaOD) wurden folgende Signale gefunden:

$\delta$ = 45 - 53 ppm: breite Multipletts (polymere Phosphinsäuregruppen): Integral: 49
$\delta$ = 30 - 35 ppm: breites Multiplett (Phosphonige Säure-Endgruppen): Integral: 42
berechnete mittlere Kettenlänge: $\bar{u}$ = 3.3

Beispiel 4: Polyethylenphosphinsäure-Natriumsalz

41 g (0.45 Mol) der nach Beispiel 1 erhaltenen Polyethylenphosphinsäure wurden langsam in eine Lösung von 18 g (0.45 Mol) NaOH in 100 ml Wasser eingetragen, wobei eine klare Lösung entstand. Nach Entfernung des

Wassers und Trocknen im Wasserstrahlvakuum bei 130°C erhielt man 50.8 g Polyethylenphosphinsäure-Natriumsalz, entsprechend einer Ausbeute von 100%.

Beispiel 5: Polyethylenphosphinsäure-Aluminiumsalz

41 g (0.45 Mol) der nach Beispiel 1 erhaltenen Polyethylenphosphinsäure wurden langsam in eine Lösung von 18 g (0.45 Mol) NaOH in 100 ml Wasser eingetragen, wobei eine klare Lösung des Polyethylenphosphinsäure-Natriumsalzes entstand. Anschließend wurde eine Lösung von 50 g (0.075 Mol) $Al_2(SO_4)_3 \cdot 18\ H_2O$ in 50 mL Wasser zugetropft. Das spontan ausfallende Salz wurde abfiltriert und zweimal mit je 100 mL Wasser gewaschen. Nach Trocknen im Wasserstrahlvakuum bei 130°C erhielt man 43.8 g Polyethylenphosphinsäure-Aluminiumsalz, entsprechend einer Ausbeute von 96%.

Beispiel 6: Polyethylenphosphinsäure-Aluminiumsalz

In einem beheizbaren Glasrohrreaktor mit Begasungsfritte wurde über einen Zeitraum von 30 h bei einer Temperatur von ca. 100°C gasförmiges Acetylen in eine Lösung von 106 g Natriumhypophosphit (1 mol) in 250 ml Eisessig eingeleitet. Über den gesamten Zeitraum wurde dabei gleichmäßig eine Lösung von 27 g (10 Mol%) 2,2'-Azobis(2-amidinopropan)-dihydrochlorid in 500 g eines Wasser/Essigsäure-Gemisches (1:3) zudosiert. Nach einer Nachreaktionszeit von 0.5 h wurden 24 g (0.3 Mol) Aluminiumhydroxid zugefügt und das Reaktionsgemisch 4 h auf 80°C und anschließend 5 h unter Rückfluß (112°C) erhitzt. Anschließend wurde filtriert, zweimal mit je 200 ml Wasser gewaschen und im Wasserstrahlvakuum bei 130°C getrocknet. So erhielt man 72 g Polyethylenphosphinsäure-Aluminiumsalz, entsprechend einer Ausbeute von 72 %, bezogen auf eingesetztes Hypophosphit.

Im $^{31}P$-NMR-Spektrum (NaOD) wurden folgende Signale gefunden:
$\delta$ = 45 - 53 ppm: breite Multipletts (polymere Phosphinsäuregruppen): Integral: 88
$\delta$ = 30 - 35 ppm: breites Multiplett (Phosphonige Säure-Endgruppen): Integral: 0.3 berechnete mittlere Kettenlänge: $\bar{u}$ = 588.

Die erfindungsgemäßen Phosphinsäuren stellen eine völlig neue Klasse von Polymeren dar, deren Eigenschaften in hohem Maße variiert werden können.

**Patentansprüche**

1. Polymere Phosphinsäuren und ihre Salze der allgemeinen Formel (I),

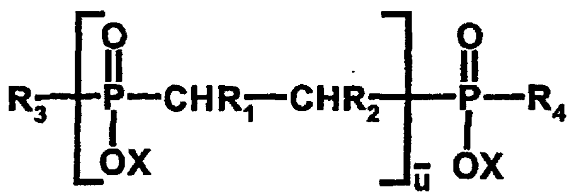

(I)

in der

X Wasserstoff oder ein 1/m Metall der Wertigkeit m bedeutet,
$R_1$, $R_2$ gleich oder verschieden sind und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen,
$R_3$, $R_4$ gleich oder verschieden sind und für Wasserstoff oder für eine Vinylgruppe der allgemeinen Formel (VI)

$$-CR_1{=}CHR_2$$

(VI)

steht, in der $R_1$ , $R_2$ die oben angegebenen Bedeutung haben, und
$\bar{u}$ die mittlere Zahl von Monomereinheiten bedeutet **und** $\geq$ **2 ist.**

2. Polymere Phosphinsäuren und ihre Salze nach Anspruch 1, **dadurch gekennzeichnet, daß** es sich bei X um ein Metall der Gruppen IA, IIA, IIIA, IVA, VA, IIB, IVB, VIIB, VIIIB des Periodensystems oder um Cer handelt.

3. Polymere Phosphinsäuren und ihre Salze nach Anspruch 1 oder 2, **dadurch gekennzeichnet, daß** es sich bei dem Metall um Li, Na, K, Mg, Ca, Sr, Ba, Al, Ge, Sn, Sb, Bi, Zn, Ti, Zr, Mn, Fe und/oder Ce handelt.

4. Polymere Phosphinsäuren und ihre Salze nach einem oder mehreren der Ansprüche 1 bis 3, **dadurch gekennzeichnet, daß** es sich bei dem Metall um Na, Ca, Al und/oder Zn handelt.

5. Polymere Phosphinsäuren und ihre Salze nach Anspruch 1, **dadurch gekennzeichnet, daß** es sich bei X um H handelt.

6. Polymere Phosphinsäuren und ihre Salze nach einem oder mehreren der Ansprüche 1 bis 5, **dadurch gekennzeichnet, daß** $R_1$ , $R_2$ gleich oder verschieden sind und für Wasserstoff oder für eine - ggf. substituierte - Alkylgruppe mit 1 bis 10 C-Atomen stehen.

7. Polymere Phosphinsäuren und ihre Salze nach einem oder mehreren der Ansprüche 1 bis 6, **dadurch gekennzeichnet, daß** $R_1$ , $R_2$ gleich oder verschieden sind und für Wasserstoff oder für eine - ggf. substituierte - Alkylgruppe mit 1 bis 10 C-Atomen stehen, wobei es sich bei den Substituenten um einen oder mehreren aus den Gruppen OH, CN, $NH_2$, handelt.

8. Polymere Phosphinsäuren und ihre Salze nach einem oder mehreren der Ansprüche 1 bis 7, **dadurch gekennzeichnet, daß** $R_1$ , $R_2$ gleich oder verschieden sind und für Wasserstoff oder für eine Alkylgruppe mit 1 bis 4 C-Atomen stehen, die mit ein oder zwei OH-Gruppen substituiert ist.

9. Polymere Phosphinsäuren und ihre Salze nach einem oder mehreren der Ansprüche 1 bis 5, **dadurch gekennzeichnet, daß** $R_1$ , $R_2$ gleich oder verschieden sind und für Wasserstoff oder für ein Carbonsäurederivat stehen.

10. Polymere Phosphinsäuren und ihre Salze nach Anspruch 9, **dadurch gekennzeichnet, daß** $R_1$ , $R_2$ gleich oder verschieden sind und für Wasserstoff oder für ein Carbonsäuederivat der Formel COOR stehen und R eine Alkylgruppe mit 1 bis 4 C-Atomen bedeutet.

11. Polymere Phosphinsäuren und ihre Salze nach einem oder mehreren der Ansprüche 1 bis 10, **dadurch gekennzeichnet, daß** $R_3$ , $R_4$ für Wasserstoff stehen.

12. Polymere Phosphinsäuren und ihre Salze nach einem oder mehreren der Ansprüche 1 bis 10, **dadurch gekennzeichnet, daß** $R_3$ , $R_4$ jeweils für eine Vinylgruppe der allgemeinen Formel $-CR_1=CHR_2$ (VI) stehen, in der $R_1$ , $R_2$ die oben angegebenen Bedeutung haben.

13. Polymere Phosphinsäuren und ihre Salze nach einem oder mehreren der Ansprüche 1 bis 10, **dadurch gekennzeichnet, daß** $R_3$ für H und $R_4$ für eine Vinylgruppe der allgemeinen Formel $-CR_1=CHR_2$ (VI) steht, in der $R_1$ , $R_2$ die oben zugegebenen Bedeutung haben.

14. Polymere Phosphinsäuren und ihre Salze nach einem oder mehreren der Ansprüche 1 bis 10, **dadurch gekennzeichnet, daß** $R_3$ für eine Vinylgruppe der allgemeinen Formel - $CR_1=CHR_2$ (VI) steht, in der $R_1$ , $R_2$ die oben angegebenen Bedeutung haben und $R_4$ für H steht.

15. Polymere Phosphinsäuren und ihre Salze nach einem oder mehreren der Ansprüche 12 bis 14, **dadurch gekennzeichnet, daß** $R_1$ und $R_2$ jeweils eine gleiche oder verschieden Alkylgruppe mit 1 bis 10 C-Atomen oder Wasserstoff bedeuten.

16. Polymere Phosphinsäuren und ihre Salze, nach Anspruch 1, der Formel

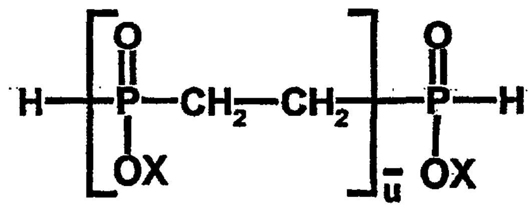

mit X = H, 1/m Metall wobei $\bar{u}$ die mittlere Zahl von Monomereinheiten bedeutet und ≥ 2 ist.

**17.** Polymere Phosphinsäuren und ihre Salze, nach Anspruch 1, der Formel

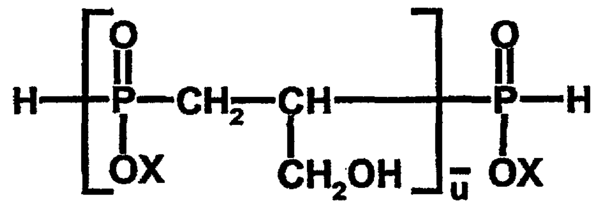

mit X = H, 1/m Metall wobei $\bar{u}$ die mittlere Zahl von Monomereinheiten bedeutet und ≥2 ist.

**18.** Polymere Phosphinsäuren und ihre Salze, nach Anspruch 1, der Formel

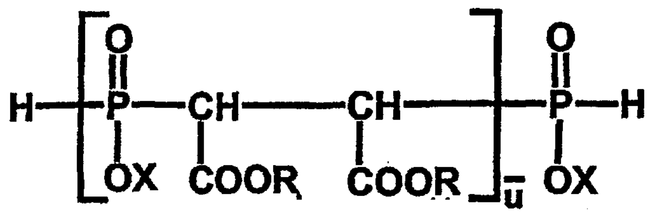

mit X = H, 1/m Metall und R=$C_1$-$C_4$-Alkyl wobei $\bar{u}$ die mittlere Zahl von Monomereinheiten bedeutet und ≥2 ist.

**19.** Polymere Phosphinsäuren und ihre Salze, nach Anspruch 1, der Formel

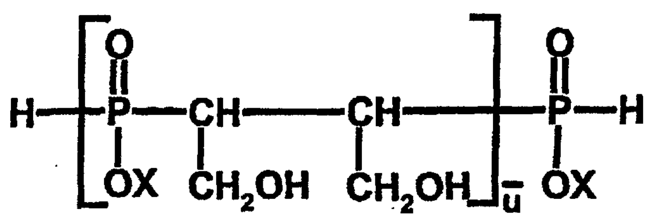

mit X = H, 1/m Metall wobei $\bar{u}$ die mittlere Zahl von Monomereinheiten bedeutet und ≥2 ist.

**20.** Verfahren zur Herstellung von polymeren Phosphinsäuren und ihren Salzen der Formel (I), **dadurch gekennzeichnet, daß** man Hypophosphorige Säure und/oder ihre Alkalimetallsalze mit Acetylenen der Formel (II),

$$R_1-C\equiv C-R_2$$

(II)

in der $R_1$ , $R_2$ gleich oder verschieden sind und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen, umsetzt.

**21.** Verfahren nach Anspruch 20 zur Herstellung von Metallsalzen von polymeren Phosphinsäuren, **dadurch gekennzeichnet, daß** man Alkalimetallsalze der Hypophosphorigen Säure mit Acetylenen der Formel (II) umsetzt und die so erhaltenen Alkalimetallsalze der polymeren Phosphinsäure mit mindestens einer Metallverbindung der Gruppen IA, IIA, IIIA, IVA, VA, IB, IVB, VIIB, VIIIB des Periodensystems oder mit einer Cerverbindung umsetzt.

**22.** Verfahren nach Anspruch 21 zur Herstellung von Metallsalzen von polymeren Phosphinsäuren, **dadurch gekennzeichnet, daß** man die nach Anspruch 20 erhaltenen polymeren Phosphinsäuren mit mindestens einer Metallverbindung der Gruppen IA, IIA, IIIA, IVA, VA, IIB, IVB, VIIB, VIIIB des Periodensystems oder mit einer Cerverbindung umsetzt.

**23.** Verfahren nach Anspruch 21 oder 22, **dadurch gekennzeichnet, daß** es sich bei der Metallverbindung um eine solche von Li, K, Na, Mg, Ca, Sr, Ba, Al, Ge, Sn, Sb, Bi, Zn, Ti, Zr, Mn, Fe und/oder Ce handelt.

**24.** Verfahren nach Anspruch 20 zur Herstellung von polymeren Phosphinsäuren, **dadurch gekennzeichnet, daß** man Alkalimetallsalze der Hypophosphorigen Säure mit Acetylenen der Formel (II) umsetzt und die so erhaltenen Alkalimetallsalze der polymeren Phosphinsäure mit einer Säure zur polymeren Phosphinsäure umsetzt.

**25.** Verfahren nach einem oder mehreren der Ansprüche 20 bis 24, **dadurch gekennzeichnet, daß** man pro Mol Hypophosphorige Säure oder ihrem Alkalimetallsalz 0,6 bis 1,5 Mol Acetylen der Formel (II) einsetzt.

**26.** Verfahren nach einem oder mehreren der Ansprüche 20 bis 25, **dadurch gekennzeichnet, daß** die Umsetzung in Gegenwart eines Radikalstarters erfolgt.

**27.** Verfahren nach einem oder mehreren der Ansprüche 20 bis 26, **dadurch gekennzeichnet, daß** als Radikalstarter Azo-Verbindungen eingesetzt werden.

**28.** Verfahren nach Anspruch 27, **dadurch gekennzeichnet, daß** es sich bei den Azo-Verbindungen um kationische und/oder nicht-kationische Azo-Verbindungen handelt.

**29.** Verfahren nach Anspruch 27 oder 28, **dadurch gekennzeichnet, daß** als kationische Azo-Verbindungen 2,2'-Azobis(2-amidinopropan)dihydrochlorid oder 2,2'-Azobis(N,N'dimethylenisobutyramidin)dihydrochlorid eingesetzt werden.

**30.** Verfahren nach Anspruch 27 oder 28, **dadurch gekennzeichnet, daß** als nicht-kationische Azo-Verbindungen Azobis(isobutyronitril), 4,4'Azobis(4-cyano-pentansäure), 2,2'Azobis(2-methylbutyronitril), eingesetzt werden.

**31.** Verfahren nach Anspruch 26, **dadurch gekennzeichnet, daß** als Radikalstarter peroxidische anorganische und/oder peroxidische organische Radikalstarter eingesetzt werden.

**32.** Verfahren nach Anspruch 31, **dadurch gekennzeichnet, daß** als peroxidische anorganische Radikalstarter Wasserstoffperoxid und/oder Ammoniumperoxodisulfat, eingesetzt werden.

**33.** Verfahren nach Anspruch 31, **dadurch gekennzeichnet, daß** daß als peroxidische organische Radikalstarter Dibenzoylperoxid und/oder Di-tert.-butylperoxid, eingesetzt werden.

**34.** Verfahren nach einem oder mehreren der Ansprüche 20 bis 33, **dadurch gekennzeichnet, daß** die Umsetzung in einem polaren Lösungsmittel erfolgt.

**35.** Verfahren nach Anspruch 34, **dadurch gekennzeichnet, daß** es sich bei dem polaren Lösungsmittel um Essigsäure handelt.

**36.** Verfahren nach einem oder mehreren der Ansprüche 20 bis 35, **dadurch gekennzeichnet, daß** die Umsetzung bei einer Temperatur von 20 bis 180 °C erfolgt.

**37.** Verfahren nach einem oder mehreren der Ansprüche 20 bis 36, **dadurch gekennzeichnet, daß** die Umsetzung bei einer Temperatur von 80 bis 120 °C erfolgt.

**38.** Verfahren nach einem oder mehreren der Ansprüche 20 bis 37, **dadurch gekennzeichnet, daß** die Umsetzung in einem Druckreaktor erfolgt.

**39.** Verfahren nach einem oder mehreren der Ansprüche 20 bis 38, **dadurch gekennzeichnet, daß** als Edukte Hypophosphorige Säure und/oderAlkalisalze der Hypophosphorigen Säure eingesetzt werden.

**40.** Verfahren nach einem oder mehreren der Ansprüche 20 bis 39, **dadurch gekennzeichnet, daß** als Edukte Natriumhypophosphit eingesetzt wird.

**41.** Verfahren nach einem oder mehreren der Ansprüche 20 bis 40, **dadurch gekennzeichnet, daß** als Acetylene die 1-Alkine, Propargylalkohol, Butindiol, Propiolsäure und/oder Acetylendicarbonsäure-Derivate eingesetzt werden.

**42.** Verfahren nach einem oder mehreren der Ansprüche 20 bis 41, **dadurch gekennzeichnet, daß** als Acetylen Ethin eingesetzt wird.

**43.** Verwendung von polymeren Phosphinsäuren und ihren Salzen gemäß einem oder mehreren der Ansprüche 1 bis 19 als Flammschutzmittel.

**44.** Verwendung von polymeren Phosphinsäuren und ihren Salzen gemäß einem oder mehreren der Ansprüche 1 bis 19 als Flammschutzmittel in thermoplastischen Polymeren.

**45.** Verwendung von polymeren Phosphinsäuren und ihren Salzen gemäß einem oder mehreren der Ansprüche 1 bis 19 zur Herstellung von Synthesebausteinen für die phosphororganische Synthese.

**Claims**

**1.** A polymeric phosphinic acid or a salt thereof of the formula (I)

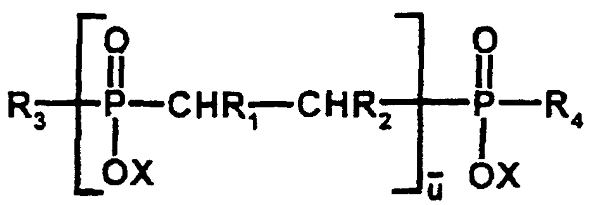

**(I)**

in which

| | |
|---|---|
| X | is hydrogen or a 1/m metal of valency m, |
| $R_1$ and $R_2$ | are identical or different and are hydrogen, a carboxyl group, a carboxylic acid derivative, an unsubstituted or substituted alkyl group having 1 to 10 carbon atoms, phenyl, benzyl or alkyl-substituted aromatics, |
| $R_3$ and $R_4$ | are identical or different and are hydrogen or a vinyl group of the formula (VI) |

$$-CR_1{=}CHR_2$$

**(VI)**

in which $R_1$ and $R_2$ have the abovementioned meaning, and
$\bar{u}$ is the average number of monomer units and is $\geq 2$.

**2.** A polymeric phosphinic acid or a salt thereof as claimed in claim 1, wherein X is a metal of groups IA, IIA, IIIA, IVA, VA, IIB, IVB, VIIB, VIIIB of the Periodic Table or is cerium.

**3.** A polymeric phosphinic acid or a salt thereof as claimed in claim 1 or 2, wherein the metal is Li, Na, K, Mg, Ca, Sr, Ba, Al, Ge, Sn, Sb, Bi, Zn, Ti, Zr, Mn, Fe and/or Ce.

**4.** A polymeric phosphinic acid or a salt thereof as claimed in one or more of claims 1 to 3, wherein the metal is Na, Ca, Al and/or Zn.

**5.** A polymeric phosphinic acid or a salt thereof as claimed in claim 1, wherein X is H.

**6.** A polymeric phosphinic acid or a salt thereof as claimed in one or more of claims 1 to 5, wherein $R_1$ and $R_2$ are identical or different and are hydrogen or an unsubstituted or substituted alkyl group having 1 to 10 carbon atoms.

**7.** A polymeric phosphinic acid or a salt thereof as claimed in one or more of claims 1 to 6, wherein $R_1$ and $R_2$ are identical or different and are hydrogen or an unsubstituted or substituted alkyl group having 1 to 10 carbon atoms, where the substituents are one or more of the groups OH, CN or $NH_2$.

**8.** A polymeric phosphinic acid or a salt thereof as claimed in one or more of claims 1 to 7, wherein $R_1$ and $R_2$ are identical or different and are hydrogen or an alkyl group having from 1 to 4 carbon atoms and substitution by one or two OH groups.

**9.** A polymeric phosphinic acid or a salt thereof as claimed in one or more of claims 1 to 5, wherein $R_1$ and $R_2$ are identical or different and are hydrogen or a carboxylic acid derivative.

**10.** A polymeric phosphinic acid or a salt thereof as claimed in claim 9, wherein $R_1$ and $R_2$ are identical or different and are hydrogen or a carboxylic acid derivative of the formula COOR and R is an alkyl group having from 1 to 4 carbon atoms.

**11.** A polymeric phosphinic acid or a salt thereof as claimed in one or more of claims 1 to 10, wherein $R_3$ and $R_4$ are hydrogen.

**12.** A polymeric phosphinic acid or a salt thereof as claimed in one or more of claims 1 to 10, wherein each of $R_3$ and $R_4$ is a vinyl group of the formula $-CR_1=CHR_2$ (VI), in which $R_1$ and $R_2$ have the abovementioned meanings.

**13.** A polymeric phosphinic acid or a salt thereof as claimed in one or more of claims 1 to 10, wherein $R_3$ is H and $R_4$ is a vinyl group of the formula $-CR_1=CHR_2$ (VI), in which $R_1$ and $R_2$ have the abovementioned meanings.

**14.** A polymeric phosphinic acid or a salt thereof as claimed in one or more of claims 1 to 10, wherein $R_3$ is a vinyl group of the formula $-CR_1=CHR_2$ (VI), in which $R_1$ and $R_2$ have the abovementioned meanings and $R_4$ is H.

**15.** A polymeric phosphinic acid or a salt thereof as claimed in one or more of claims 12 to 14, wherein each of $R_1$ and $R_2$ is an identical or different alkyl group having 1 to 10 carbon atoms or is hydrogen.

**16.** A polymeric phosphinic acid or a salt thereof, as claimed in claim 1, of the formula

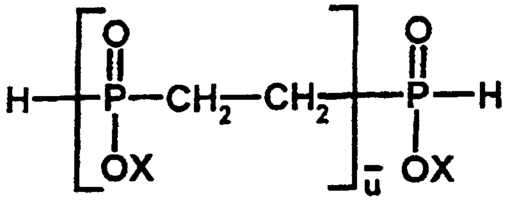

where X = H or 1/m metal, and where u is the average number of monomer units and is ≥ 2.

**17.** A polymeric phosphinic acid or a salt thereof, as claimed in claim 1, of the formula

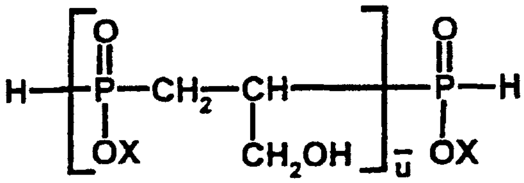

where X = H or 1/m metal, and where $\bar{u}$ is the average number of monomer units and is ≥ 2.

**18.** A polymeric phosphinic acid or a salt thereof, as claimed in claim 1, of the formula

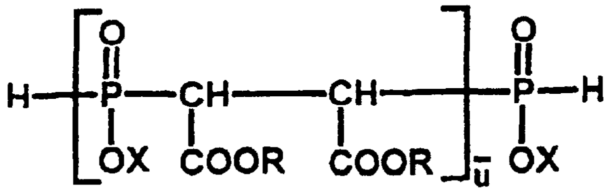

where X = H or 1/m metal,
and where $\bar{u}$ is the average number of monomer units and is ≥ 2.

**19.** A polymeric phosphinic acid or a salt thereof, as claimed in claim 1, of the formula

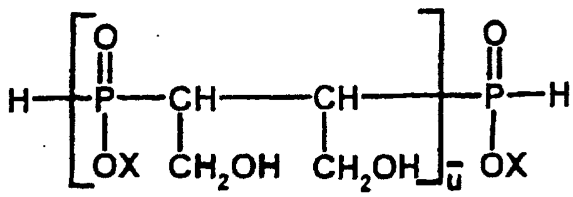

where X = H or 1/m metal,
and where $\bar{u}$ is the average number of monomer units and is ≥ 2.

**20.** A process for preparing polymeric phosphinic acids and their salts of the formula (I), which comprises reacting hypophosphorous acid and/or its alkali metal salts with acetylenes of the formula (II)

$$R_1-C\equiv C-R_2$$

(II)

in which $R_1$ and $R_2$ are identical or different and are hydrogen, a carboxyl group, a carboxylic acid derivative, an unsubstituted or substituted alkyl group having 1 to 10 carbon atoms, phenyl, benzyl or alkyl-substituted aromatics.

**21.** The process as claimed in claim 20 for preparing metal salts of polymeric phosphinic acids, wherein alkali metal salts of hypophosphorous acid are reacted with acetylenes of the formula (II) and the resultant alkali metal salts of the polymeric phosphinic acid are reacted with at least one metal compound of groups IA, IIA, IIIA, IVA, VA, IIB, IVB, VIIB, VIIIB of the Periodic Table, or with a cerium compound.

**22.** The process as claimed in claim 21 for preparing metal salts of polymeric phosphinic acids, wherein the polymeric phosphinic acids obtained as claimed in claim 20 are reacted with at least one metal compound of groups IA, IIA, IIIA, IVA, VA, IIB, IVB, VIIB, VIIIB of the Periodic Table, or with a cerium compound.

**23.** The process as claimed in claim 21 or 22, wherein the metal compound is a compound of Li, K, Na, Mg, Ca, Sr, Ba, Al, Ge, Sn, Sb, Bi, Zn, Ti, Zr, Mn, Fe and/or Ce.

**24.** The process as claimed in claim 20 for preparing polymeric phosphinic acids, wherein alkali metal salts of hypophosphorous acid are reacted with acetylenes of the formula (II) and the resultant alkali metal salts of the polymeric phosphinic acid are reacted with an acid to give the polymeric phosphinic acid.

**25.** The process as claimed in one or more of claims 20 to 24, wherein from 0.6 to 1.5 mol of acetylene of the formula (II) are used per mole of hypophosphorous acid or of its alkali metal salt.

**26.** The process as claimed in one or more of claims 20 to 25, wherein the reaction takes place in the presence of a free-radical initiator.

**27.** The process as claimed in one or more of claims 20 to 26, wherein an azo compound is used as free-radical initiator.

**28.** The process as claimed in claim 27, wherein the azo compound is a cationic and/or noncationic azo compound.

**29.** The process as claimed in claim 27 or 28, wherein the cationic azo compound used is 2,2'-azobis(2-amidinopropane) dihydrochloride or 2,2'-azobis(N,N'-dimethyleneisobutyramidine) dihydrochloride.

**30.** The process as claimed in claim 27 or 28, wherein the noncationic azo compound used is azobis(isobutyronitrile), 4,4'-azobis(4-cyanopentanoic acid) or 2,2'-azobis(2-methylbutyronitrile).

**31.** The process as claimed in claim 26, wherein the free-radical initiator used is an inorganic peroxidic and/or organic peroxidic free-radical initiator.

**32.** The process as claimed in claim 31, wherein the inorganic peroxidic free-radical initiator used hydrogen peroxide and/or ammonium peroxodisulfate.

**33.** The process as claimed in claim 31, wherein the organic peroxidic free-radical initiator used is dibenzoyl peroxide and/or di-tert-butyl peroxide.

**34.** The process as claimed in one or more of claims 20 to 33, wherein the reaction takes place in a polar solvent.

**35.** The process as claimed in claim 34, wherein the polar solvent is acetic acid.

**36.** The process as claimed in one or more of claims 20 to 35, wherein the reaction takes place at a temperature of from 20 to 180°C.

**37.** The process as claimed in one or more of claims 20 to 36, wherein the reaction takes place at a temperature of from 80 to 120°C.

**38.** The process as claimed in one or more of claims 20 to 37, wherein the reaction takes place in a pressure reactor.

**39.** The process as claimed in one or more of claims 20 to 38, wherein the starting materials used are hypophosphorous acid and/or alkali metal salts of hypophosphorous acid.

**40.** The process as claimed in one or more of claims 20 to 39, wherein the starting materials used comprise sodium hypophosphite.

**41.** The process as claimed in one or more of claims 20 to 40, wherein the acetylenes used comprise 1-alkynes, propargyl alcohol, butynediol, propiolic acid and/or acetylenedicarboxylic acid derivatives.

**42.** The process as claimed in one or more of claims 20 to 41, wherein the acetylene used comprises ethyne.

**43.** The use, as flame retardants, of polymeric phosphinic acids and of their salts as claimed in one or more of claims 1 to 19.

**44.** The use, as flame retardants in thermoplastic polymers, of polymeric phosphinic acids and of their salts as claimed in one or more of claims 1 to 19.

**45.** The use, for preparing synthetic building blocks for synthesis in organophosphorus chemistry, of polymeric phosphinic acids and of their salts as claimed in one or more of claims 1 to 19.

## Revendications

**1.** Acides phosphiniques polymères et leurs sels de formule générale (I)

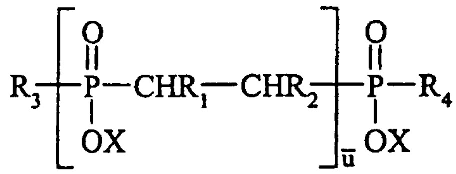

dans laquelle

X est un atome d'hydrogène ou un métal léger de valence m,
$R_1$ et $R_2$ sont identiques ou différents et représentent chacun un atome d'hydrogène, un groupe carboxyle, un dérivé d'acide carboxylique, un groupe alkyle éventuellement substitué ayant de 1 à 10 atomes de carbone, le groupe phényle, benzyle ou un groupe aromatique à substitution alkyle,
$R_3$ et $R_4$ sont identiques ou différents et représentent chacun un atome d'hydrogène ou un groupe vinyle de formule générale (VI)

$$-CR_1 = CHR_2 \quad \text{(VI)}$$

dans laquelle $R_1$ et $R_2$ ont les significations données ci-dessus, et $\bar{u}$ est le nombre moyen de motifs monomères, et est ≥ 2.

**2.** Acides phosphiniques polymères et leurs sels selon la revendication 1, **caractérisés en ce que**, pour ce qui concerne X, il s'agit d'un métal des groupes IA, IIA, IIIA, IVA, VA, IIB, IVB, VIIB, VIIIB du Tableau Périodique, ou du cérium.

**3.** Acides phosphiniques polymères et leurs sels selon la revendication 1 ou 2, **caractérisés en ce que**, pour ce qui concerne le métal, il s'agit de Li, Na, K, Mg, Ca, Sr, Ba, Al, Ge, Sn, Sb, Bi, Zn, Ti, Zr, Mn, Fe et/ou Ce.

**4.** Acides phosphiniques polymères et leurs sels selon l'une ou plusieurs des revendications 1 à 3, **caractérisés en ce que**, pour ce qui concerne le métal, il s'agit de Na, Ca, Al et/ou Zn.

**5.** Acides phosphiniques polymères et leurs sels selon la revendication 1, **caractérisés en ce que**, pour ce qui concerne X, il s'agit de H.

**6.** Acides phosphiniques polymères et leurs sels selon l'une ou plusieurs des revendications 1 à 5, **caractérisés en ce que** $R_1$ et $R_2$ sont identiques ou différents et représentent chacun un atome d'hydrogène ou un groupe alkyle éventuellement substitué, ayant de 1 à 10 atomes de carbone.

**7.** Acides phosphiniques polymères et leurs sels selon l'une ou plusieurs des revendications 1 à 6, **caractérisés en ce que** $R_1$ et $R_2$ sont identiques ou différents et représentent chacun un atome d'hydrogène ou un groupe alkyle éventuellement substitué, ayant de 1 à 10 atomes de carbone, auquel cas, pour ce qui concerne les substituants, il s'agit d'un ou plusieurs des groupes OH, CN, $NH_2$.

**8.** Acides phosphiniques polymères et leurs sels selon l'une ou plusieurs des revendications 1 à 7, **caractérisés en**

**ce que** $R_1$ et $R_2$ sont identiques ou différents et représentent chacun un atome d'hydrogène ou un groupe alkyle ayant de 1 à 4 atomes de carbone, qui est substitué par un ou deux groupes OH.

**9.** Acides phosphiniques polymères et leurs sels selon l'une ou plusieurs des revendications 1 à 5, **caractérisés en ce que** $R_1$ et $R_2$ sont identiques ou différents et représentent chacun un atome d'hydrogène ou un dérivé d'acide carboxylique.

**10.** Acides phosphiniques polymères et leurs sels selon la revendication 9, **caractérisés en ce que** $R_1$ et $R_2$ sont identiques ou différents et représentent chacun un atome d'hydrogène ou un dérivé d'acide carboxylique de formule COOR, et R est un groupe alkyle ayant de 1 à 4 atomes de carbone.

**11.** Acides phosphiniques polymères et leurs sels selon l'une ou plusieurs des revendications 1 à 10, **caractérisés en ce que** $R_3$ et $R_4$ représentent chacun un atome d'hydrogène.

**12.** Acides phosphiniques polymères et leurs sels selon l'une ou plusieurs des revendications 1 à 10, **caractérisés en ce que** $R_3$ et $R_4$ représentent chacun un groupe vinyle de formule générale $-CR_1=CHR_2$ (VI), dans laquelle $R_1$ et $R_2$ ont les significations données ci-dessus.

**13.** Acides phosphiniques polymères et leurs sels selon l'une ou plusieurs des revendications 1 à 10, **caractérisés en ce que** $R_3$ est H et $R_4$ est un groupe vinyle de formule générale $-CR_1=CHR_2$ (VI) dans laquelle $R_1$ et $R_2$ ont les significations données ci-dessus.

**14.** Acides phosphiniques polymères et leurs sels selon l'une ou plusieurs des revendications 1 à 10, **caractérisés en ce que** $R_3$ est un groupe vinyle de formule générale $-CR_1=CHR_2$ (VI), dans laquelle $R_1$ et $R_2$ ont les significations données ci-dessus, et $R_4$ est H.

**15.** Acides phosphiniques polymères et leurs sels selon l'une ou plusieurs des revendications 12 à 14, **caractérisés en ce que** $R_1$ et $R_2$ représentent chacun un groupe alkyle identique ou différent ayant de 1 à 10 atomes de carbone ou un atome d'hydrogène.

**16.** Acides phosphiniques polymères et leurs sels selon la revendication 1, de formule

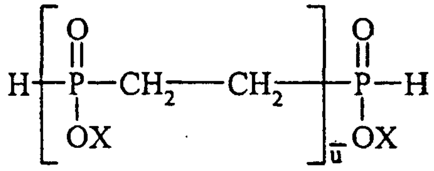

dans laquelle X est H ou un métal léger,
où $\bar{u}$ est le nombre moyen de motifs monomères et est ≥ 2.

**17.** Acides phosphiniques polymères et leurs sels selon la revendication 1, de formule

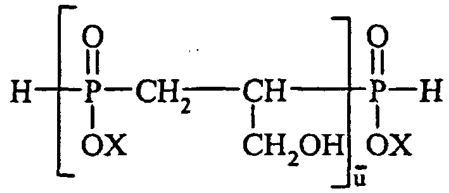

dans laquelle X est H ou un métal léger,
où $\bar{u}$ est le nombre moyen de motifs monomères et est ≥ 2.

**18.** Acides phosphiniques polymères et leurs sels selon la revendication 1, de formule

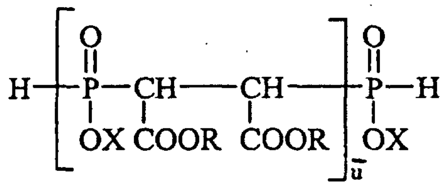

dans laquelle X est H ou un métal léger, et R est un groupe alkyle en $C_1$-$C_4$,

où $\bar{u}$ est le nombre moyen de motifs monomères et est ≥ 2.

**19.** Acides phosphiniques polymères et leurs sels selon la revendication 1, de formule

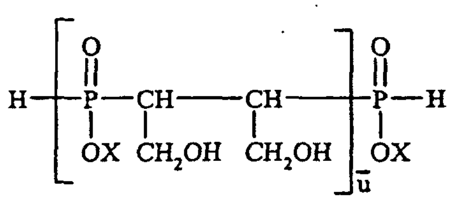

dans laquelle X est H ou un métal léger,

où $\bar{u}$ est le nombre moyen de motifs monomères et est ≥ 2.

**20.** Procédé de préparation d'acides phosphiniques polymères et de leurs sels de formule (I), **caractérisé en ce qu'**on fait réagir de l'acide hypophosphoreux et/ou ses sels de métaux alcalins avec des acétylènes de formule (II)

$$R_1 - C \equiv C - R_2 \qquad (II)$$

dans laquelle $R_1$ et $R_2$ sont identiques ou différents et représentent chacun un atome d'hydrogène, un groupe carboxyle, un dérivé d'acide carboxylique, un groupe alkyle éventuellement substitué et ayant de 1 à 10 atomes de carbone, un groupe phényle, benzyle, ou des groupes aromatiques à substitution alkyle.

**21.** Procédé selon la revendication 20 pour préparer des sels métalliques d'acides phosphoniques polymères, **caractérisé en ce qu'**on fait réagir des sels de métaux alcalins de l'acide hypophosphoreux avec des acétylènes de formule (II), et on fait réagir les sels de métaux alcalins ainsi obtenus de l'acide phosphinique polymère avec au moins un composé métallique des groupes IA, IIA, IIIA, IVA, VA, IIB, IVB, VIIB, VIIIB du Tableau Périodique ou avec un composé du cérium.

**22.** Procédé selon la revendication 21 pour préparer des sels métalliques d'acides phosphiniques polymères, **caractérisé en ce qu'**on fait réagir les acides phosphiniques polymères obtenus selon la revendication 20 avec au moins un composé métallique des groupes IA, IIA, IIIA, IVA, VA, IIB, IVB, VIIB, VIIIB du Tableau Périodique ou avec un composé du cérium.

**23.** Procédé selon la revendication 21 ou 22, **caractérisé en ce que**, pour ce qui concerne le composé métallique, il s'agit d'un composé de Li, K, Na, Mg, Ca, Sr, Ba, Al, Ge, Sn, Sb, Bi, Zn, Ti, Zr, Mn, Fe et/ou Ce.

**24.** Procédé selon la revendication 20 pour préparer des acides phosphiniques polymères, **caractérisé en ce qu'**on fait réagir des sels de métaux alcalins de l'acide hypophosphoreux avec des acétylènes de formule (II), et on fait réagir les sels de métaux alcalins ainsi obtenus de l'acide phosphinique polymère avec un acide pour obtenir l'acide phosphinique polymère.

**25.** Procédé selon l'une ou plusieurs des revendications 20 à 24, **caractérisé en ce qu'**on utilise par mole d'acide hypophosphoreux ou de son sel d'un métal alcalin 0,6 à 1,5 moles d'acétylène de formule (II).

**26.** Procédé selon l'une ou plusieurs des revendications 20 à 25, **caractérisé en ce que** la réaction a lieu en présence

d'un amorceur radicalaire.

**27.** Procédé selon l'une ou plusieurs des revendications 20 à 26, **caractérisé en ce qu'**on utilise en tant qu'amorceur radicalaire des composés azoiques.

**28.** Procédé selon la revendication 27, **caractérisé en ce que**, pour ce qui concerne les composés azoiques, il s'agit de composés azoïques cationiques et/ou non cationiques.

**29.** Procédé selon la revendication 27 ou 28, **caractérisé en ce qu'**on utilise en tant que composés azoïques cationiques le dichlorhydrate de 2,2'-azobis(2-amidino-propane) ou le dichlorhydrate de 2,2'-azobis(N,N'-diméthylèneisobutyramidine).

**30.** Procédé selon la revendication 27 ou 28, **caractérisé en ce qu'**on utilise en tant que composés azoiques non cationiques l'azobis(isobutyronitrile), l'acide 4,4'-azobis(4-cyano-pentanoique), le 2,2'-azobis(2-méthyl-butyronitrile).

**31.** Procédé selon la revendication 26, **caractérisé en ce qu'**on utilise en tant qu'amorceurs radicalaires des amorceurs radicalaires inorganiques de type peroxyde et/ou organiques de type peroxyde.

**32.** Procédé selon la revendication 31, **caractérisé en ce qu'**on utilise en tant qu'amorceurs radicalaires inorganiques de type peroxyde du peroxyde d'hydrogène et/ou du peroxodisulfate d'ammonium.

**33.** Procédé selon la revendication 31, **caractérisé en ce qu'**on utilise en tant qu'amorceurs radicalaires organiques de type peroxyde du peroxyde de dibenzoyle et/ou du peroxyde de di-tert-butyle.

**34.** Procédé selon l'une ou plusieurs des revendications 20 à 33, **caractérisé en ce que** la réaction a lieu dans un solvant polaire.

**35.** Procédé selon la revendication 34, **caractérisé en ce que**, pour ce qui concerne le solvant polaire, il s'agit d'acide acétique

**36.** Procédé selon l'une ou plusieurs des revendications 20 à 35, **caractérisé en ce que** la réaction a lieu à une température de 20 à 180°C.

**37.** Procédé selon l'une ou plusieurs des revendications 20 à 36, **caractérisé en ce que** la réaction a lieu à une température de 80 à 120°C.

**38.** Procédé selon l'une ou plusieurs des revendications 20 à 37, **caractérisé en ce que** la réaction a lieu dans un réacteur sous pression.

**39.** Procédé selon l'une ou plusieurs des revendications 20 à 38, **caractérisé en ce qu'**on utilise en tant que matières de charge l'acide hypophosphoreux et/ou les sels de métaux alcalins de l'acide hypophosphoreux.

**40.** Procédé selon l'une ou plusieurs des revendications 20 à 39, **caractérisé en ce qu'**on utilise en tant que matières de charge l'hypophosphite de sodium.

**41.** Procédé selon l'une ou plusieurs des revendications 20 à 40, **caractérisé en ce qu'**on utilise en tant qu'acétylènes les 1-alcynes, l'alcool propargylique, le butynediol, l'acide propiolique et/ou les dérivés de l'acide acétylènedicarboxylique.

**42.** Procédé selon l'une ou plusieurs des revendications 20 à 41, **caractérisé en ce qu'**on utilise de l'éthyne en tant qu'acétylène.

**43.** Utilisation d'acides phosphiniques polymères et de leurs sels selon l'une ou plusieurs des revendications 1 à 19 en tant qu'agent d'ignifugation.

**44.** Utilisation d'acides phosphiniques polymères et de leurs sels selon l'une ou plusieurs des revendications 1 à 19 en tant qu'agent d'ignifugation dans les polymères thermoplastiques.

**45.** Utilisation d'acides phosphiniques polymères et de leurs sels selon l'une ou plusieurs des revendications 1 à 19 pour préparer des composants de synthèse pour la synthèse organique des composés du phosphore.